# EUROPÄISCHE PATENTSCHRIFT

(11) **EP 0 715 564 B1**
(45) Veröffentlichungstag und Bekanntmachung des Hinweises auf die Patenterteilung: **12.03.1997**
(21) Anmeldenummer: 94920882.1
(22) Anmeldetag: 15.07.1994
(51) Int. Cl.: B27B 5/16, B23D 45/02, B23D 47/02

(54) **KAPP-, GEHRUNGS- UND TISCHSÄGE**
TABLE TYPE, MITRE BOX CROSS-CUT SAW
SCIE OSCILLATOIRE A ONGLET POURVUE D'UN ETABLI

(30) Priorität: 15.07.1993 DE 4323640
(43) Veröffentlichungstag der Anmeldung: 12.06.1996
(73) Patentinhaber: B + G Maschinenbau GmbH, 73734 Esslingen (DE)
(72) Erfinder: Bergler, Otto, D-75417 Mühlacker (DE)
(74) Vertreter: Rüger, Rudolf, Dr.-Ing.
(86) Internationale Anmeldenummer: DE9400818
(87) Internationale Veröffentlichungsnummer: WO9502490

(56) Entgegenhaltungen:
- EP-A- 0 291 031
- DE-A- 3 347 920
- DE-C- 4 106 635
- DE-U- 8 900 108

## Beschreibung

Die Erfindung bezieht sich auf eine kombinierte Tisch- und Gehrungskreissäge.

Aus der DE-PS-41 06 635 ist eine kombinierte Kapp-, Gehrungs- und Tischkreissägen bekannt, die eine in einem Gestell drehbar gelagerte Grundplatte aufweist, an der eine Kreissägeeinheit bewegbar angebracht ist. Die Grundplatte kann um die horizontale Drehachse gewendet werden, um die Säge wahlweise als Tischkreissäge oder als Kappsäge verwenden zu können. In der Stellung Tischkreissäge ragt das Sägeblatt durch eine Schlitz in der Grundplatte, die dabei als Werkstückauflage dient. In der anderen Stelllung als Kappsäge kann die Kreissäge durch den Benutzer auf die Grundplatte zu bzw. von dieser wegbewegt werden, um ein auf die Grundplatte aufgelegtes Werkstück abzulängen, ohne es bewegen zu müssen. Dabei muß, um eine möglichst großen Schnittbereich zu erhalten, das Sägeblatt möglichst tief in das Werkstück eintauchen. Das bedeutet bei der bekannten Säge, daß der Rand des Sägeblatts über den Rand des Rundtisches hinausgeraten kann. Um diesen Hub zu ermöglichen ist für die Gehrungseinstellung 0° in Verlängerung des Sägeschlitzes in dem Rundtisch ein Sägeschlitz in der Tischplatte vorgesehen.

Bei Gehrungswinkeleinstellungen verschieden von 0° muß das Sägeblatt über der Tischplatte verlaufen, was zu unbrauchbar kleinen Schnittbereichen führen würde. Um dennoch vernünftige Schnittlängen erreichen zu können, enthält die Verbindung zwischen der Sägeeinheit und dem Rundtisch Führungsschienen, längs denen die Sägeeinheit bewegt werden kann, wodurch eine Art Radialarmsäge entsteht. Die Folge davon ist, daß bereits bei vergleichsweise kleinen Schnittbereichen in der Gehrungseinstellung die Sägeeinheit zusätzlich zu Verschwenken auch noch radial bewegt werden muß und zwar ungünstigerweise im Gleichlauf.

Ausgehend hiervon ist es Aufgabe der Erfindung eine kombinierte Kapp-, Gehrungs- und Tischsäge zu schaffen, die in Gehrungsstellungen beim Kappsägen denselben Schnittbereich aufweist wie in der Einstellung ohne Gehrung.

Diese Aufgabe wird erfindungsgemäß mit einer Kapp-, Gehrungs- und Tischsäge mit den Merkmalen des Anspruchs 1 erreicht.

Aufgrund der neben dem Rundtisch angeordneten Sägeöffnung ist auch bei Gehrungseistellungen ein Eintauchen möglich wie bei Geradschnitten. Dadurch ist in vielen Fällen die reine Kappbewegung ausreichend, so daß auch Sägen ohne Radialsägefunktion sinnvoll sind. Solche Sägen sind wegen der größeren Einfachheit leichter und billiger.

Besonders vielfältige Einstellmöglichkeiten werden erzielt, wenn die Sägeöffnung sektorförmig und wenn sie sich vorteilhafterweise um 45° oder mehr um den Rundtisch herum erstreckt, gemessen als Zentriwinkel, ausgehend von der Drehachse des Rundtisches. Falls ohne Änderung der Werkstückauflage Gehrungen in beiden Richtungen geschnitten werden sollen, kommt der größere Längenbereich in Frage, so daß, ausgehend von der rechtwinkligen Stellung, in der beim Kapp- oder Radialarmsägen keine Gehrung geschnitten wird, Schwenkungen von 45° nach beiden Seiten möglich sind.

Da die Erfahrung aber auch lehrt, daß der überwiegende Teil der Gehrungsschnitte mit Winkeln 22,5°, 30° und 45° geschnitten werden, können auch mehrere einzelne Sägeöffnungen an den entsprechenden Stellen in dem Sägetisch enthalten sein.

Eine gute Auflage des Werkstücks in der Stellung Kappsägen kann entweder dadurch erreicht werden, daß der Rundtisch mit einem Fortsatz versehen ist, der eine entsprechende Verlängerung des Sägeschlitzes in dem Rundtisch enthält oder indem die Sägeöffnung mit einer Abdeckung verschlossen wird, die gleichzeitig als Auflage beim Kappsägen dient. Im lezteren Fall besteht die Abdeckung vorteilhafterweise aus einem leicht zerspanbaren Material, um nach Bedarf die notwendigen Sägeöffnungen mit der Säge selbst einschneiden zu können.

Im übrigen lassen sich auf diese Weise ohne weiteres auch ungewöhnliche Zwischenwinkel einstellen und, wenn die Abdeckung im Laufe der Zeit wegen der Einstellung zu stark unterschiedlicher Zwischenwinkel verschlissen sind, werden sie gegen neue unverbrauchte Abdeckungen ausgetauscht.

Gute Auflageverhältnisse in der Stellung Tischkreissäge werden erreicht, wenn die Sägeöffnung in dieser Stellung möglichst weitgehend verschlossen ist. Hierzu können Klappen verwendet werden, die in der Stellung Kappsägen nach unten klappen und die Sägeöffnung freigeben und in der Stellung Tischsägen selbstätig die Sägeöffnung verschließen.

Es ist deswegen zweckmäßig, die Werkstückauflagemittel leicht lösbar mit der Tischplatte zu verbinden.

Die Höhe der Abdeckung richtet sich nach der Ausführung des Rundtisches und ist bei einem Rundtisch ohne Fortsatz so groß wie das Stück, um das sich gegebenenfalls die zweite Rundtischfläche über der zweiten Tischfläche erhebt.

Im übrigen sind Weiterbildungen der Erfindung Gegenstand von Unteransprüchen.

In der Zeichnung ist ein Ausführungsbeispiel der Erfindung dargestellt. Es zeigen:
- Fig. 1: eine Kapp-, Gehrungs- und Tischkreissäge in einer perspektivischen Ansicht von vorne,
- Fig. 2: die Tischplatte der Säge nach Fig. 1 in einer stark schematisierten Draufsicht auf die Seite zum Kappsägen,
- Fig. 3: die Tischplatte der Säge nach Fig. 1 in einer stark schematisierten Draufsicht auf die Seite zum Tischsägen,
- Fig. 4: die Säge nach Fig. 1 in der Stellung zum Kappsägen, unter Veranschaulichung unterschiedlicher Positionen des Kreissägeblatts beim Kappsägen und in einem Längsschnitt parallel zu der Ebene des Kreissägeblatts ,
- Fig. 5: eine andere Ausführungsform einer Kapp-, Gehrungs- und Tischkreissäge mit einem Rundtisch ohne Fortsatz, in einer perspektivischen Ansicht von vorne,
- Fig. 6: die Tischplatte der Säge nach Fig. 5 in einer stark schematisierten Draufsicht auf die Seite zum Kappsägen,
- Fig. 7: eine weitere Ausführungsform einer Tischplatte für einer Kapp-, Gehrungs- und Tischkreissäge nach einer der Fig. 1 oder 5, und
- Fig. 8: eine Kapp-, Gehrungs- und Tischkreissäge in einem Längsschnitt mit Werkstückauflagemitteln, die sich bis über den Rundtisch erstrecken.

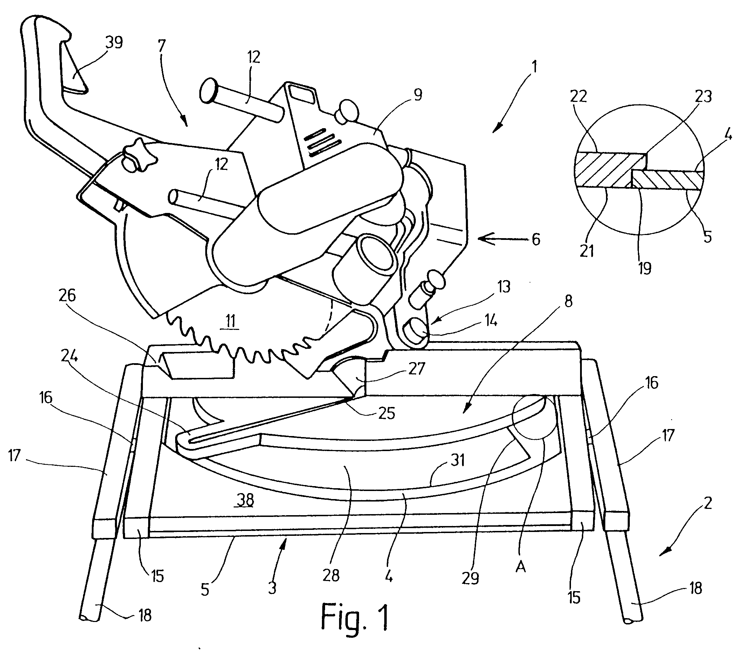

Fig. 1 zeigt in perspektivischer Darstellung eine kombinierte Tisch-, Kapp- und Gehrungssäge 1 mit einem Gestell 2, einer in dem Gestell 2 klappbar gelagerten Tischplatte 3, die zwei zueinander parallele Tischflächen 4 und 5 aufweist, und mit Lagermitteln 6, die eine Sägeeinheit 7 mit einem Rundtisch 8 verbinden, der drehbar in die Tischplatte 3 eingelassen ist. Die Sägeeinheit 7 besteht aus einem Gehäuse 9, in dem sich ein Antriebsmotor befindet, und in dem Lagermittel angeordnet sind, die eine aus Darstellungsgründen nicht sichtbare Sägewelle lagern, die von dem Motor angetrieben wird und auf der drehfest ein Kreissägeblatt 11 sitzt.

Die Lagermittel 6 umfassen eine Längsführungseinrichtung 12 in Gestalt von zwei zueinander parallelen zylindrischen Stangen, auf denen mit Kugelführungsbüchsen kippgesichert das Gehäuse 9 längsverschieblich ist. Ferner umfassen die Lagermittel 6 ein Gelenk 13, das zumindest eine Achse 14 aufweist, die es gestattet, das Kreissägeblatt 11 in Richtung auf die Tischplatte 3 hin bzw. von dieser wegzubewegen, um sogenannte Kappschnitte durchzuführen. Zum Ausführen von Doppelgehrungsschnitten kann eine weitere Schwenkachse vorhanden sein, die parallel zu der Tischfläche 4 liegt.

Die Tischplatte 3 ist seitlich mit zwei Verstärkungsstreben 15 versehen, die mittig Dreh- oder Schwenkzapfen 16 enthalten. Diese Schwenkzapfen 16 stecken in entsprechenden Bohrungen von zwei seitlichen Wangen 17 des Gestells 2. Die beiden Wangen 17 sind durch nicht weiter erkennbare Streben parallel und im Abstand starr miteinander verbunden und außerdem dienen sie als Befestigungen für Aufstellfüße 18, mit denen die Säge 1 auf einem Boden aufzustellen ist.

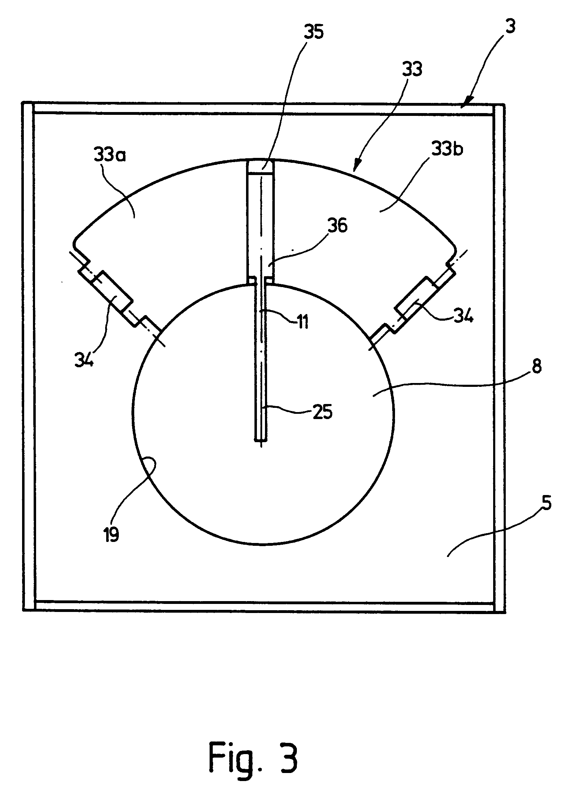

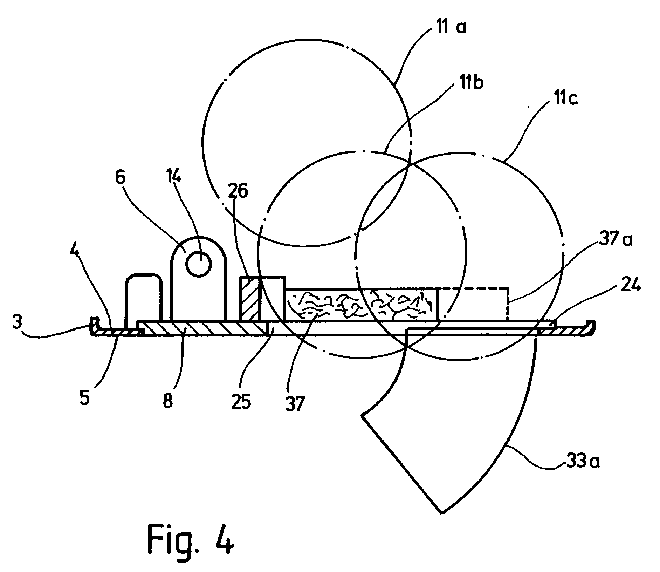

Etwa mittig zwischen den beiden seitlichen Streben 15 enthält die Tischplatte 3, wie Fig. 3 oder 4 erkennen läßt, eine große Durchgangsbohrung 19 mit kreisrundem Querschnitt. In dieser kreisrunden Durchgangsbohrung 19 steckt eingelassen der Rundtisch 8, der die Form einer Kreisscheibe mit zwei zueinander parallelen Rundtischflächen 21 und 22 hat. Wie die Detailzeichnungen A erkennen läßt, ist der Rundtisch 8 mit einer längs seinem Umfang sich erstreckenden durchgehenden und im Querschnitt rechteckigen Rippe 23 versehen, die auf der Tischplatte 3 liegt. Die Anordnung ist dabei so getroffen, daß die Rundtischfläche 21 mit der Tischfläche 5 bündig ist, während sich andererseits die Rundtischfläche 22 ein Stück weit über der Tischfläche 4 erhebt.

Mittels nicht weiter gezeigter Sicherungsglieder ist der Rundtisch 8 dagegen gesichert, daß er, bezogen auf die Darstellung von Fig. 1, nach oben aus der Tischplatte 3 herauszunehmen ist. Die Sicherungsmittel wirken hierzu mit der Rippe 23 zusammen.

Außerdem ist der Rundtisch mit einem Fortsatz 24 versehen, der einstückig an den Rundtisch 8 angeformt ist. Dieser Fortsatz weist eine mit der Rundtischfläche 22 bündige Oberseite auf und außerdem hat er die Stärke der Rippe 23, womit seine Unterseite mit der Tischfläche 4 bündig ist.

In dem Rundtisch 8 ist in Verlängerung des Sägeblatts 11 ein den Rundtisch 8 der Dicke nach durchsetzender Sägeschlitz 25 enthalten, der sich bis in den Fortsatz 24 erstreckt.

Oberhalb des Rundtisches 8 ist an den Streben 15 ein Werkstückanschlag 26 befestigt, der die Tischfläche 4 überspannt und an den beiden Streben 15 befestigt sind. Er ist in der bekannten Weise mit einer Ausnehmung 27 versehen, die ein stückweites Eintauchen des Kreissägeblattes 11 ermöglicht. Die wirksame Fläche des Werkstückanschlags 26 enthält die Drehachse des Rundtisches 8 und außerdem ist er so gestaltet, daß sich die Lagermittel 6, bezogen auf die Darstellung von Fig. 1, hinter der Anschlagfläche des Werkstückanschlags 26 befinden.

In die Durchgangsöffnung 19, in der der Rundtisch 8 sitzt, mündet eine Durchgangsöffnung 28, die die Gestalt eines Kreisringabschnitts hat. Sie ist von zwei, bezogen auf die Drehachse des Rundtisches 8, etwa radial verlaufenden geraden Rändern 29 und einem bogenförmigen Rand 31 begrenzt ist, der radial im Abstand von dem Rundtisch 8 verläuft. Diese sektorförmige Öffnung 26 bildet eine Sägeöffnung für den Durchtritt des Sägeblatts 11 bei Kappsägen wird. Der Krümmungsmittelpunkt der Sägeöffnung 28 fällt mit der Drehachse des Rundtisches 8 zusammen.

Die Werkstückauflageplatte 21 weist eine umlaufende Schulter 32 auf, mit der sie neben den Rändern 27, 28, 29 auf der Tischfläche 4 aufliegt und außerdem auf der Oberseite der Rippe 23 abgestützt ist. Dadurch ist die Werkstückauflageplatte 31 bezüglich Kräften, die in der in Fig. 1 gezeigten Kappsägestellung von oben wirken.

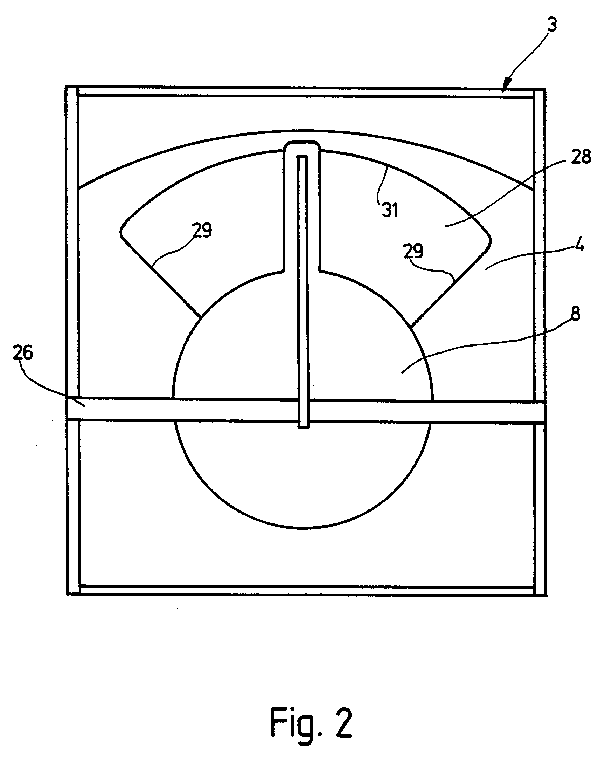

Somit ist auch der bogenförmige Rand 31, wie Fig. 2 erkennen läßt, konzentrisch zu dem Rand des Rundtisches 8, womit der Fortsatz 24 auch an seinem von dem Rundtisch 8 abliegenden Ende auf der Tischfläche 4 abgestützt ist. Er überspannt somit freiragend die Sägeöffnung 28 und wird lediglich an seinen beiden Enden gehalten, also dort, wo er einstückig in den Rundtisch 8 übergeht und an seinem freien Ende, wo er auf der Tischfläche 4 aufliegt.

Diese Öffnung ist verhältnismäßig groß und würde, wenn die gezeigte Säge 1 in die Stellung zum Tischkreissägen umgeklappt ist, stören. In der Stellung zum Tischkreissägen würde die ebene Tischfläche 5 nach oben zeigen und hätte, wenn keine besonderen Vorkehrungen getroffen wären, entsprechend große Löcher. Bei der neuen Säge ist der Sägeöffnung 28 ein Abdeckung 33 zugeordnet, die sich aus zwei klappenförmigen Abschnitten 33a und 33b zusammensetzt. Jeder dieser beiden Abdeckungsabschnitte 33a und 33b hat die Gestalt einer Platte, die aus einem Kreisring ausgeschnitten ist und sie ist in der Nähe der Ränder 29 mittels eines zugehörigen Scharniers 34 an der Tischplatte anscharniert.

Von der Seite der Tischfläche 5 her folgt der Außenkontur der Sägeöffnung 28 ein Rücksprung 35, der eine vertieft liegende Schulter bildet. Der Abstand dieser Schulter von der Tischfläche 5 entspricht der Stärke der beiden Abdeckungsabschnitte 33a und 33b, so daß, wenn diese in dem Rücksprung 35 auf der betreffenden Schulter aufliegen, einerseits die Sägeöffnung 28 vollständig verdeckt ist und andererseits die Abschnitte 33a und 33b der Abdeckung 33 mit der durch die Tischfläche 5 definierten Ebene exakt bündig sind. Es versteht sich, daß auch die beiden Scharnier 34 entsprechend versenkt angeordnet sind, damit nichts über die Tischfläche 5 übersteht, was eine Bewegung eines Werkstücks beim Tischkreissägen behindern könnte.

Fig. 3 läßt ferner erkennen, daß die beiden Abschnitte 33a und 33b der Abdeckung 33 zwischen sich mittig einen Spalt 36 freilassen, der so ausgerichtet ist, daß seine Achse senkrecht auf der Anschlagfläche des Werkstückanschlags 26 steht, d.h. seine Lage entspricht einem Gehrungswinkel von 0° und er verlängert unmittelbar in dieser Gehrungseinstellung den Sägeschlitz 25. In der Stellung Tischkreissäge kann somit ohne Beschädigung der Abdeckung 33 das Sägeblatt 11 maximal weit aus der Tischplatte 3 nach oben auftauchen. In der Stellung zum Tischkreissägen sind die Lagermittel ohnehin auf den Gehrungswinkel 0° eingestellt.

Die Handhabung der insoweit beschriebenen Säge 1 ist wie folgt, wobei zusätzlich auf die Fig 4 Bezug genommen wird:

Wenn mit der Säge 1 Kapp- oder Gehrungsschnitte durchgeführt werden sollen, wird eine nicht weiter erkennbare Arretierungseinrichtung, die zwischen dem Gestell 2 und der Tischplatte 3 wirksam ist, gelöst, worauf die Tischplatte 3 um die Lagerzapfen 16 herumgeklappt werden kann, bis die Tischfläche 4, wie in Fig. 1 gezeigt, nach oben weist. Sobald die Tischfläche 5 nach unten zeigt klappen auch die Abschnitte 33a und 33b der Abdeckung nach unten, d. h. sie hängen frei an ihren Scharnieren 34 nach unten. Die Sägeöffnung 28 ist damit auf ihrer gesamten Länge offen und frei.

Nunmehr wird durch Drehen des Rundtisches in der als Lagerung dienenden Durchgangsöffnung 19 der gewünschte Gehrungswinkel eingestellt. In dieser Position wird der Rundtisch 8 mit Hilfe bekannter Maßnahmen festgespannt, so daß er nicht mehr verdrehbar ist. Jetzt kann bei angehobener Sägeeinheit 7 ein abzulängendes Werkstück 37 aufgelegt werden, das, ein ebenes Werkstück vorausgesetzt, vollflächig auf der glatten Rundtischfläche 22, der damit bündigen Oberseite des Fortsatzes 24, den betreffenden oberen Flächen der Verstärkungsstreben 15 sowie gegebenenfalls ein Stück weit auf einem Unterlagestück 38 aufliegt, das sich zwischen den beiden Verstärkungsstreben 15 auf der Tischfläche 4 befindet und etwa konzentrisch jedoch mit Abstand die Sägeöffnung 28 umgibt. Nach Einschalten des Antriebsmotors mittels eines Schalters 37 kann bei rotierendem Kreissägeblatt 11 die Sägeeinheit 7 auf das aufgelegte Werkstück 37 abgesenkt werden, bis es seine untere Stellung erreicht. Fig. 4 veranschaulicht schematisch die unterschiedlichen Positionen des Kreissägeblattes 11, dessen Außenumfang dort mit einer strichpunktierten Kreislinie angedeutet ist. Der Kreis 11a zeigt die Lage des Kreissägeblattes 11 zu Beginn des Kappsägevorganges bzw. vor dem Einlegen des Werkstücks 37. Wie bereits erwähnt, wird die Sägeeinheit 7 abgesenkt und am Ende der Absenkbewegung entspricht die Lage des Kreissägeblattes 11 dem strichpunktierten Kreis 11b. In dieser Stellung ist das Kreissägeblatt 11 maximal abgesenkt und es tauch so weit wie möglich durch den Sägeschlitz 25 des Rundtisches 8 und seines Fortsatzes 24 durch.

Fig. 4 läßt weiter erkennen, daß alleine durch das Herunterschwenken der Sägeeinheit 7 das Werkstück 37 vollständig durchtrennt werden konnte, weil das tiefe Eintauschen einen großen Schnittbereich ermöglicht. Für den Großteil der Anwendungen recht dieser Schnittbereich völlig aus. Lediglich wenn das Werkstück größere Abmessungen hat, wie dies durch eine strichpunktierte Linie 37a angedeutet ist, muß die Sägeeinheit 7 zusätzlich auf den Längsführungen 12 von den Lagermitteln 6 in Richtung auf den Benutzer zurückgezogen, wodurch das Kreissägeblatt 11 in die Position entsprechend dem Kreis 11c gelangt.

Erkennbarerweise kann jede beliebige Gehrungseinstellung vorgenommen werden und in keinem Fall kann das Sägeblatt 11 mit der Sägeöffnung 28 bzw. dessen Rändern 29, 31 kollidieren. Auch ist bei jeder Gehrungseinstellung das Werkstück 37 unterhalb des Sägeblatts 11 unterstützt, und zwar entweder durch die entstprechende Rundtischfläche 22 oder die damit bündige Oberseite des Fortsatzes 24, dieser liegt seinerseits auf der Tischfläche 4 auf.

Wenn anschließend mit der Säge 1 als Tischkreissäge weitergearbeitet weden soll, wird zunächst die Sägeeinheit 9 in die Gehrungseinstellung 0° gebracht (in der Einstellung 0° steht die Ebene des Sägeblatts 11 senkrecht auf der Anschlagfläche des Werkstückanschlags 26) und sodann auf die Tischplatte 3 abgesenkt. Durch bekannte Mittel wird die Sägeinheit 9 in dieser Absenkstellung fixiert. Nun werden die Arretierungsmittel gelöst, die die Tischplatte relativ zu dem Gestell 2 festlegen, und die Tischplatte kann herumgeklappt werden bis die Tischfläche 5 nach oben zeigt. In dieser Stellung werden die Arretierungsmittel wieder eingerastet, womit die Tischplatte 3 in der umgeklappten Stellung festgelegt ist. Beim Umklapppen der Tischplatte 3 klappen auch die Abschnitte 33a und 33b der Abdeckung 33 zurück und verschließen bis auf den Spalt 36 die Sägeöffnung 28. Die Tischplatte ist damit bis auf die zum Tischsägen nötigen Öffnungen verschlossen, ohne daß zusätzliche Handgriffe an der Säge 1 nötig sind.

Falls die lose Beweglichkeit der Abschnitte 33a und 33b in den Scharnieren 34 stört, können auch zusätzliche Sicherungsmittel beispielsweise Magnete vorgesehen werden, um die Abschnitte 33a und 33b temporär zu fixieren.

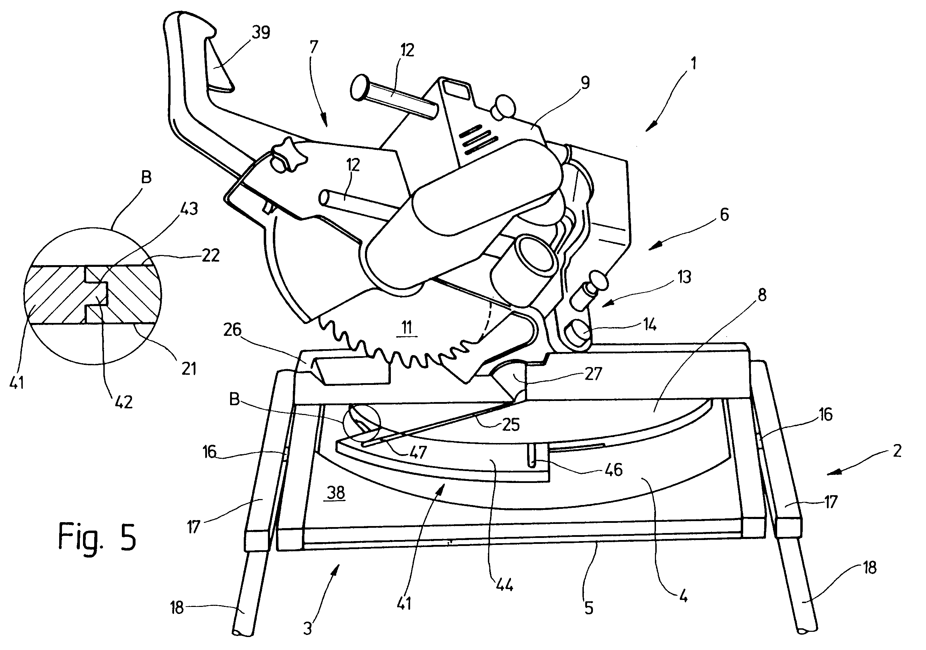

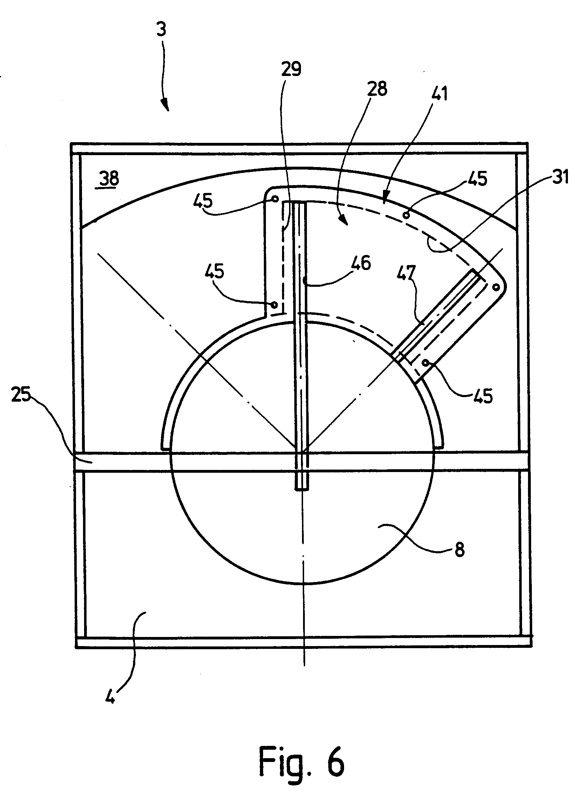

In den Fig. 5 und 6 ist ein anderes Ausführungsbeispiel der neuen Säge 1 veranschaulicht. In diesen Figuren werden bereits für beschriebene Bauteile oder Bauteile mit ähnlicher Funktion dieselben Bezugszeichen verwendet wie in den Fig. 1 bis 4.

Das Ausführungsbeispiel in den Fig. 5 und 6 unterscheidet sich von dem Ausführungsbeispiel nach den Fig. 1 bis 4 dadurch, daß der Rundtisch 8 keinen Fortsatz 24 aufweist. Die Sägeöffnung 28 ist vielmehr durch ein plattenförmiges Auflagestück 41 verschlossen, das in die Durchgangsöffnung 28 von der Tischfläche 4 her eingelegt ist. Ferner ist, lediglich um zu zeigen, daß auch noch andere Gehrungswinkelbereiche möglich sind, die Bogenlänge der Sägeöffnung 28 auf ca. 45° Zentriwinkel, bezogen auf den Rundtisch 8, beschränkt.

Wie die Detailzeichnung B von Fig. 5 erkennen läßt, ist die Abdeckplatte 41 auf ihrer dem Rundtisch 8 benachbarten Seite mit einer Rippe 42 versehen, die eine Paßfeder bildet. Sie steckt in einer entsprechenden Nut 43 in der Umfangsfläche des Rundtisches 8. Die Nut 43 befindet sich lediglich in einem begrenzten Bereich der Umfangsfläche des Rundtisches 8, und zwar in jenem Bereich, der bei den unterschiedlich möglichen Gehrungswinkeleinstellungen zwischen 0° und 45° nach links (diese Einstellung ist in Fig. 5 gezeigt) der Abdeckplatte 41 gegenüberliegen kann.

Die Figur läßt ferner erkennen, daß die Abdeckplatte 41 im wesentlichen Spaltfrei an den Umfang des Rundtisches 8 angrenzt,

Unterhalb des in Fig. 5 sichtbaren Teils der Abdeckplatte 41 verjüngt sich die Fläche der Abdeckplatte 41 auf die Randabmessungen der Sägeöffnung 28. Die Abdeckplatte 41 bildet auf diese Weise ein exakt in die Sägeöffnung 28 passendes Füllstück, das mit seiner betreffenden Fläche 5, die in Fig. 5 unten liegt, mit der Tischfläche 5 exakt bündig ist, während eine dem Betrachter zugekehrte obere Seite 44 mit der Rundtischfläche 22 bündig ist.

Im Ursprungszustand ist beispielsweise die Abdeckplatte eine durchgehende ununterbrochene Platte, die beispielsweise mit Schrauben 45 auf der Tischplatte 3 festgeschraubt ist.

Bei der ersten Handhabung, sei es als Kreissäge, sei es als Kappsäge mit Gehrungseinstellung 0°, wird in Verlängerung des Sägeschlitzes 25 ein der Breite des Sägeblattes 11 entsprechender Schlitz 46 in die Abdeckplatte 41 eingeschnitten. Beim weiteren Gebrauch mit unterschiedlichen Gehrungswinkeln wird für jede neue Gehrungswinkeleinstellung ein entsprechender neuer Schlitz, beispielsweise 47, durch die Abdeckplatte 41 geschnitten.

Da erfahrungsgemäß der weit überwiegende Teil von Gehrungsschnitten mit einem Gehrungswinkel von 45° ausgeführt werden, bekommt die Abdeckplatte 41 in aller Regel nur zwei Sägeschlitze 46 und 47 und ist dazwischen im wesentlichen unversehrt. Aber selbst, wenn beispielsweise noch bei Gehrungswinkeln von 30° oder 22,5° Sägeschlitze entstehen würden, wodurch die Abdeckplatte 41 eine gefiederte kammartige Struktur bekommt, bleibt die Unterstützung gewährleistet, denn alle durch die Einschnitte 46, 47 entstehenden Sektoren werden mit Hilfe der Paßfeder 42 in dem Rundtisch 8 fixiert.

Es versteht sich, daß bei dem Ausführungsbeispiel nach den Fig. 5 und 6 die Abdeckplatte 41 aus einem zerspanbaren Material, beispielsweise Holz oder Holzwerkstoff oder einem Material besteht, das mit einem Sägeblatt zerspant werden kann, das für jenes Material eingerichtet ist, das standardmäßig mit der Säge 1 bearbeitet werden soll.

Wenn durch zuviele Sägeschlitze 46, 47 die Abdeckplatte 41 verschlissen ist, wird sie nach Lösen der Schrauben 45 herausgenommen und durch eine neue Abdeckplatte 41 ersetzt.

Der Vorteil der Lösung nach den Fig. 5 und 6 besteht darin, daß die Abdeckplatte 41 gleichzeitig als Splitter- oder Ausreißschutz für die Werkstücke 37 dient, da die Sägeschlitze 46, 47 exakt die Schnittbreite des Sägeblatts 11 aufweisen.

Bei der Zerspanung liegt das Werkstück beim Kappsägen vollflächig auf dem Rundtisch 8 und der Auflageplatte 41 auf.

Bei den bisher beschriebenen Ausführungsbeispielen wird der Sägeschlitz, der in der Tischplatte 3 erforderlich ist, um die Säge in die Betriebsstellung zum Tischsägen zu bringen, gleichsam von der Sägeöffnung 28 umfaßt bzw. er ist gedanklich in der Sägeöffnung 28 enthalten.

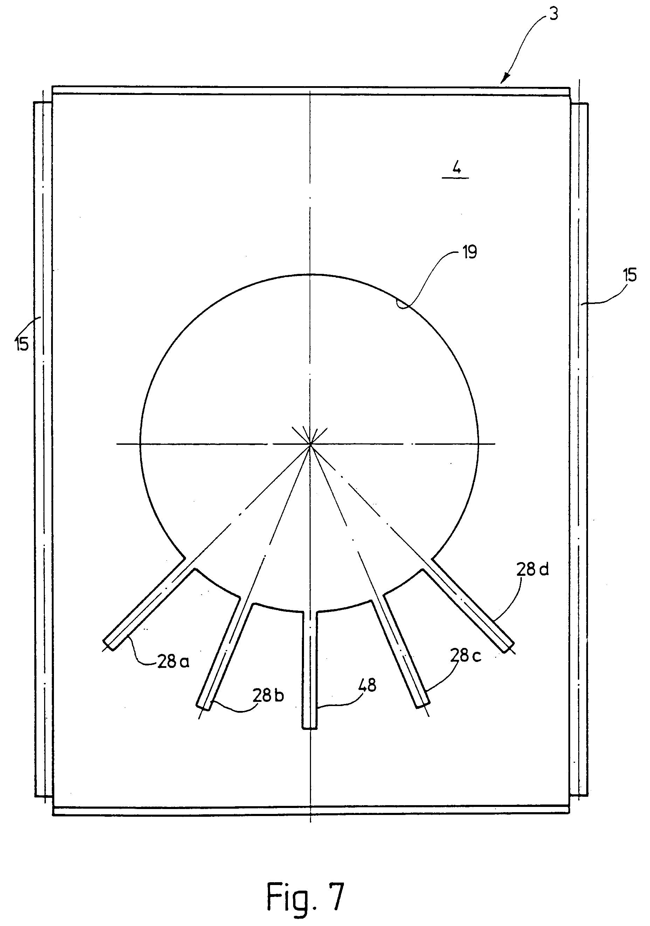

Wenn es darum geht, eine besonders einfache Lösung zu schaffen, die nur für wenige Standardfälle eingesetzt werden soll, kann eine Tischplatte 3 nach Fig. 7 verwendet werden. Diese enthält neben einem Sägeschlitz 48 für die Tischsägefunktion insgesamt vier weitere diskrete Sägeöffnungen 28a...28d, die wohl definierten Gehrungswinkeln entsprechen, beispielsweise 45° und 22,5°. Für diese einzelnen Sägeschlitze wäre keine Abdeckung erforderlich, da sie so klein sind, daß sie auch bei der Tischsägefunktion offen bleiben können.

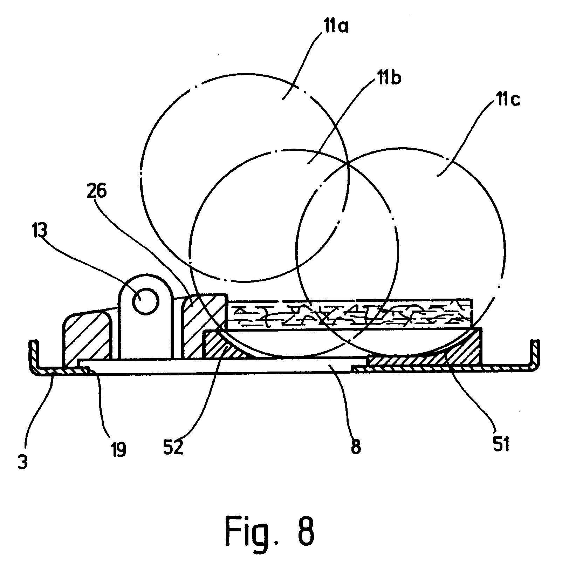

Schließlich zeigt Fig. 8 eine Ausführungsform, bei der das Sägeblatt 11 in der tiefsten Kappsägestellung mit dem Flugkreis der Zähne nicht die Rundtischfläche 22 berührt. Bei diesem Anwendungsfall ist eine Werkstückauflageplatte 51 vorgesehen, die sich nicht nur, wie bei den vorherigen Ausführungsbeispielen, um die Peripherie des Rundtisches 8 herum erstreckt, sondern die auch noch einen Fortsatz 52 aufweist, der über den Rundtisch bis hin zu dem Werkstückanschlag 26 reicht. Die Werkstückauflageplatte 51 ist bei dieser Ausführungsform mit dem Rundtisch 8 verbunden und schwenkt bei Gehrungseinstellungen mit diesem herum, so daß unabhängig von der Gehrungseinstellung immer dieselbe Nut von dem Kreissägeblatt durchfahren wird. In Fig. 8 sind im übrigen dieselben Bezugszeichen verwendet wie bei Fig. 4 und auch die strichpunktierten Kreise 11a bis 11c haben dieselbe Bedeutung.

## Patentansprüche

1. Tisch- und Gehrungssäge mit:
einem Gestell (2),
einer Tischplatte (3), die zwei zueinander im wesentlichen parallele Tischflächen (4,5) aufweist, in dem Gestell (2) um eine horiontale Achse (16) drehbar gelagert ist, derart, daß wahlweise in einer ersten Schwenklage die erste oder in einer zweiten Schwenklage die zweite Tischfläche (4,5) der Tischplatte (3) nach oben zeigt, und von der wenigstens ihre erste Tischfläche (5) eine im wesentlichen ebene Werkstückauflagefläche bildet,
Arretierungsmittel, die zwischen der Tischplatte (3) und dem Gestell (2) wirksam zu machen sind, um die Tischplatte (3) in dem Gestell (2) in ihren beiden Schwenklagen drehfest zu sichern,
einem in eine Durchgangsöffnung (19) der Tischplatte (3) eingelassenem Rundtisch (8), der zwei zueinander parallele im wesentlichen ebene Rundtischflächen (21,22) aufweist, von denen wenigstens eine mit der ersten Tischfläche (5) der Tischplatte (3) bündig ist, und der bezüglich einer auf der ersten oder der zweiten Tischfläche (4,5) senkrecht stehenden Achse drehbar ist,
an dem Rundtisch (8) vorgesehenen Lagermitteln (6), die eine ein Kreissägeblatt (11) aufweisenden Sägeeinheit (7) mit dem Rundtisch (8) verbinden, wobei die Lagermittel (6) ein arretierbares Gelenk (13) aufweisen, dessen Achse (14), bezüglich der die Sägeeinheit (7) schwenkbar ist, so liegt , daß die Sägeeinheit auf den Rundtisch zu bzw. von diesem weg bewegbar ist, und seitlich gegenüber der Drehachse des Rundtisches (8) versetz ist, die ferner mit einer Langsführungseinrichtung (12) versehen sind, die eine Längsbewegung der Sägeeinheit (7) rechtwinkelig zu der Gelenkachse (14) ermöglichen,
einem in dem Rundtisch (8) enthaltenen Sägeschlitz (34), der an einem Ende den Rundtisch (8) durchsetzt und der unterhalb des Kreissägeblatts (11) parallel zu der durch die Längsführungseinrichtung (2) festgelegten Bahn der Sägeeinheit (7) verläuft,
einem in der Tischplatte (3) enthaltenen Sägeschlitz (25), der an einem Ende den Rand der den Rundtisch (8) enthaltenden Öffnung (19) durchsetzt,
wenigstens einer weiteren in der Tischplatte enthaltenen Sägeöffnung (28), die in die Öffnung (19) zur Aufnahme des Rundtisches (8) übergeht und wenigstens einer Gehrungseinstellung beim Kappsägen entspricht.

2. Säge nach Anspruch 1, dadurch gekennzeichnet, daß die Lagermittel (6) mit einer Längsführungseinrichtung (12) versehen sind, die eine Längsbewegung der Sägeeinheit (7) rechtwinkelig zu der Gelenkachse (14) ermöglichen,

3. Säge nach Anspruch 1 oder 2, dadurch gekennzeichnet, daß die Länge der Sägeöffnung (28), gemessen in radialer Richtung bezogen auf die Drehachse des Rundtisches (8), so bemessen ist, daß bei der Kappsägefunktion das Kreissägeblatt (11) nicht mit dem am weitesten entfernt liegenden Rand (31) der Sägeöffnung (28) berührt, wenn die Sägeeinheit (7) voll eingetaucht und falls vorhanden mit Hilfe der Längsführung (12) in eine Endstellung gebracht ist, die von den Lagermitteln (6) die größte Entfernung hat.

4. Säge nach Anspruch 1, dadurch gekennzeichnet, daß die Sägeöffnung (28) eine sektorförmige Gestalt hat.

5. Säge nach Anspruch 4, dadurch gekennzeichnet, daß sich die Sägeöffnung (28) entsprechend einem Zentriwinkel zwischen 45° und ca. 100° um den Rundtisch (8) herum erstreckt.

6. Säge nach Anspruch 1, dadurch gekennzeichnet, daß zusätzlich zu dem in der Tischplatte (3) enthaltenen Sägeschlitz (48) mehrere voneinander getrennte schlitzförmig Sägeöffnungen (28a...28d) in der Tischplatte (3) enthalten sind, von denen sich zwei (28a,28b) vorzugsweise an Stellen befinden, die 45° Gehrungsschnitten entsprechen.

7. Säge nach Anspruch 1, dadurch gekennzeichnet, daß die Sägeöffnung (28) so groß ist, daß sie den Sägeschlitz in der Tischplatte (3) mit umfasst.

8. Säge nach Anspruch 1, dadurch gekennzeichnet, daß der Rundtisch (8) einen radial sich erstreckenden Fortsatz (24) aufweist, der eine Verlängerung des in dem Rundtisch (8) vorgesehenen Sägeschlitzes (25) enthält und der die Sägeöffnung (28) zumindest teilweise überdeckt, und daß der Fortsatz (24) an seinem freien Ende gegebenefalls unterstützt ist.

9. Säge nach Anspruch 8, dadurch gekennzeichnet, daß der Fortsatz (24) eine Oberseite aufweist, die mit der benachbarten Rundtischseite (22) bündig ist.

10. Säge nach Anspruch 1, dadurch gekennzeichnet, daß der Sägeöffnung (28) eine Abdeckung (33,41) zugeordnet ist, die zumindest in der Tischsägestellung die Sägeöffnung (28) zumindest bis auf den Sägeschlitz (36) verschließt und mit der ersten Tischfläche (5) (Tischsägestellung) bündig ist.

11. Säge nach Anspruch 1, dadurch gekennzeichnet, daß die Abdeckung (41) in der Stellung Kappsägen als Werkstückauflagemittel dient.

12. Säge nach Anspruch 10, dadurch gekennzeichnet, daß die Abdeckung (33,41) die Form eines Abschnitts oder Segments eines Kreisrings aufweist und daß die Abdeckung derart an der Tischplatte (3) angeordnet ist, daß der Krümmungsmittelpunkt der Abdeckung (33,41) mit der Drehachse des Rundtisches (8) zusammenfällt.

13. Säge nach Anspruch 10, dadurch gekennzeichnet, daß die andere Rundtischfläche (22) gegenüber der zweiten Tischfläche (4) um ein Stück erhöht ist und daß die Höhe der Abdeckung (41) über der zweiten Tischfläche (4) gleich dem Stück ist, um das die zweite Rundtischfläche (22) gegenüber der zweiten Tischfläche (4) erhöht ist.

14. Säge nach Anspruch 10, dadurch gekennzeichnet, daß die Abdeckung (33,41) eine im wesentlichen eine planparallele Platte ist.

15. Säge nach Anspruch 10, dadurch gekennzeichnet, daß die Abdeckung (41) aus Holz, Holzwerkstoff oder einem sonstigen Material besteht, das mit einem Kreissägeblatt (11) zerspanbar ist, das zur Zerspanung von Holz oder Holzwerkstoffen vorgesehen ist.

16. Säge nach Anspruch 10, dadurch gekennzeichnet, daß die Abdeckung (33,41) leicht lösbar mit der Tischplatte (3) verbunden ist.

17. Säge nach Anspruch 10, dadurch gekennzeichnet, daß die Abdeckung (33) an der Tischplatte (3) anscharniert ist, derart, daß die Abdeckung (33) in der Stellung zum Kappsägen nach unten aus der Tischplatte (3) herausklappen kann.

18. Sage nach Anspruch 10, dadurch gekennzeichnet, daß die Abdeckung (33) im Bereich des Sägeschlitzes (369 der Tischplatte (3) in zwei Abschnitte (33a,33b) aufgeteilt ist, von denen jeder sich leicht lösbar an der Tischplatte (3) befestigt oder an diese anscharniert ist.

19. Säge nach Anspruch 10, dadurch gekennzeichnet, daß die Abdeckung (33) in einem Bereich, der der 0°-Gehrungseinstellung entspricht, in zwei Abschnitte (33a,33b) aufgeteilt ist, von denen jeder für sich an der Tischplatte (3) anscharniert ist, derart, daß die Abschnitte (33a,33b) in der Stellung zum Kappsägen nach unten aus der Tischplatte herausklappen können.

20. Säge nach Anspruch 10, dadurch gekennzeichnet, daß die Sägeöffnung (28) unsymmetrisch bezüglich eines Bereiches, der der 0°-Gehrungseinstellung entspricht, angeordnet ist.

21. Säge nach Anspruch 10, dadurch gekennzeichnet, daß die Abdeckung alle schlitzförmige Sägeöffnungen vollständig überdeckt.

22. Säge nach Anspruch 10, dadurch gekennzeichnet, daß die Abdeckung (41) mit Zentriermitteln versehen ist, um sie lagerichtig bezüglich der Sägeöffnung (28) zu fixieren.

## Claims

1. Table-type mitre-box saw, comprising:
a frame (2),
a cable top (3) which has two substantially parallel table surfaces (4, 5), is mounted in the frame (2) to rotate about a horizontal axis (16) in such a manner that either the first or the second table surface (4, 5) of the table top (3) is directed towards the top in respective first and second pivoted positions, and at least the first table surface (5) of which forms a substantially flat workpiece-supporting surface,
locking means to be activated between the table top (3) and the frame (2) in order to secure the table top (3) against rotation in the frame (2) in both pivoted positions,
a turntable (8) which is embedded in a through opening (19) in the table top (3), and has two substantially flat parallel turntable surfaces (21, 22), at least one of which is flush with the first table surface (5) of the table top (3), and can rotate relative to a vertical axis on the first or second table surface (4, 5),
bearing means (6) provided on the turntable (8) which connect a saw unit (7) having a circular saw blade (11) to the turntable (8), the bearing means (6) having a lockable hinge (13), the axis (14) of which, relative to which the saw unit (7) can pivot, is situated in such a manner that the saw unit can be moved towards or away from the turntable and is offset relative to the axis of rotation of the turntable (8), and furthermore being provided with a longitudinal guide means (12) allowing for longitudinal movement of the saw unit (7) perpendicularly to the hinge axis (14),
a saw slot (34) contained in the turntable (8) which traverses the turntable (8) at one end and extends below the circular saw blade (11) parallel to the path of the saw unit (7) determined by the longitudinal guide means (12),
a saw slot (25) contained in the table top (3) which, by one of the ends, traverses the edge of the opening (19) containing the turnable (8), and
at least one further saw opening (28) contained in the table top which passes over into the opening (19) for receiving the turntable (8) and corresponds at least to one mitre cut adjustment in cross-cut sawing.

2. Saw according to claim 1, characterised in that the bearing means (6) are provided with a longitudinal guide means (12) allowing for longitudinal movement of the saw unit (7) perpendicularly to the hinge axis (14).

3. Saw according to claim 1 or claim 2, characterised in that the length of the saw opening (28) as measured in the radial direction relative to the axis of rotation of the turntable (8) is such that, in cross-cut sawing, the circular saw blade (11) does not contact the remotest edged (31) of the saw opening (28) when the saw unit (7) is fully inserted and, with the aid of the longitudinal guide (12), if present, is brought into an end position furthest away from the bearing means (6).

4. Saw according to claim 1, characterised in that the saw opening (28) has a sector-shaped configuration.

5. Saw according to claim 4, characterised in that the saw opening (28) extends around the turntable (8) in accordance with a central angle of between 45° and approximately 100°.

6. Saw according to claim 1, characterised in that, in addition to the saw slot (48) contained in the table top (3), a plurality of separate slot-like saw openings (28a...28d) are contained in the table top (3), two (28a, 28b) of which are preferably situated at points corresponding to 45° mitre cuts.

7. Saw according to claim 1, characterised in that the saw opening (28) is so large that it includes the saw slot in the table top (3).

8. Saw according to claim 1, characterised in that the turntable (8) has a radially extending projection (24) which contains an extension of the saw slot (25) provided in the turntable (8) and at least partially covers the saw opening (28), and that the projection (24) is optionally supported at its free end.

9. Saw according to claim 8, characterised in that the projection (24) has a top surface flush with the adjacent side (22) of the turntable.

10. Saw according to claim 1, characterised in that a cover (33, 41) is associated with the saw opening (28), said cover closing the saw opening (28) at least to the saw slot (36) at least in the table-type sawing position and being flush with the first table surface (5) (table-type sawing position).

11. Saw according to claim 1, characterised in that the cover (41) serves as a workpiece-supporting means in the cross-cut sawing position.

12. Saw according to claim 10, characterised in chat the cover (33,41) is in the form of a portion or segment of a circular ring and that the cover is arranged on the table top (3) in such a manner that the centre of curvature of the cover (33, 41) coincides with the axis of rotation of the turntable (8).

13. Saw according to claim 10, characterised in that the other turntable surface (22) is raised by one piece relative to the second table surface (4) and that the height of the cover (41) above the second table surface (4) is identical to the piece by which the second turntable surface (22) is raised relative to the second table surface (4).

14. Saw according to claim 10, characterised in that the cover (33, 41) is a substantially plane-parallel plate.

15. Saw according to claim 10, characterised in that the cover (41) consists of wood, wood-based material or any other material which can be cut with a circular saw blade (11) intended for cutting wood or wood-based materials.

16. Saw according to claim 10, characterised in that the cover (33, 41) is connected to the table top (3) in an easily removable manner.

17. Saw according to claim 10, characterised in that the cover (33) is hinged on to the table top (3) in such a manner that the cover (33) can be hinged down from the table top (3) in the cross-cut sawing position.

18. Saw according to claim 10, characterised in that the cover (33) is divided in the region of the saw slot (36) of the table top (3) into two portions (33a, 33b), each of which is secured to or hinged on to the table top (3) in an easily removable manner.

19. Saw according to claim 10, characterised in that the cover (33) is divided in a region corresponding to the 0° mitre cut adjustment into two portions (33a, 33b), each of which is hinged on to the table top (3) in such a manner that the portions (33a, 33b) can be hinged down from the table top in the cross-cut sawing position.

20. Saw according to claim 10, characterised in that the saw opening (38) is arranged asymmetrically relative to a region corresponding to the 0° mitre cut adjustment.

21. Saw according to claim 10, characterised in that the cover completely covers all of the slot-like saw openings.

22. Saw according to claim 10, characterised in that the cover (41) is provided with centring means in order to fix it in the correct position relative to the saw opening (28).

## Revendications

1. Scie à table et à onglet, comprenant :
un bâti (2),
une plaque de table (3) qui présente deux surfaces de table (4, 5) essentiellement parallèles l'une à l'autre, qui est montée dans le bâti (2) de manière à pouvoir tourner autour d'un axe horizontal (16) de telle manière qu'au choix dans une première position de pivotement une première des deux surfaces de table (4, 5) ou dans une deuxième position de pivotement la deuxième des deux surfaces de table (4, 5) de la plaque de table (3) soit tournée vers le haut, et dont au moins la première surface de table (5) forme une surface d'appui de pièce essentiellement plane,
des moyens de blocage pouvant être mis en action entre la plaque de table (3) et le bâti (2) pour immobiliser la plaque de table (3) dans le bâti (2) dans ses deux positions de pivotement,
un table circulaire (8) qui est encastrée dans une ouverture de passage (19) de la plaque de table (3), qui présente deux surfaces de table circulaire (21, 22) essentiellement planes, parallèles l'une à l'autre, dont au moins l'une est à ras de la première surface de table (5) de la plaque de table (3), et qui est mobile en rotation par rapport à un axe disposé perpendiculairement à la première ou la deuxième surface de table (4, 5),
des moyens de support (5) prévus sur la table circulaire (8) et reliant une unité de sciage (7) présentant une lame de scie circulaire (11) à la table circulaire (8), les moyens de support (6) présentant une articulation (13) susceptible d'être bloquée, dont l'axe (14), par rapport auquel peut pivoter l'unité de sciage (7), est situé de telle manière que l'unité de sciage soit déplaçable en vue de son rapprochement ou éloignement de la table circulaire, et est décalé latéralement par rapport à l'axe de rotation de la table circulaire (8), et étant en outre munis d'un dispositif de guidage longitudinal (12) qui permet un mouvement longitudinal de l'unité de sciage (7) à angle droit par rapport à l'axe d'articulation (14),
une fente de passage de scie (34) ménagée dans la table circulaire (8), cette fente traversant la table circulaire (8) à une extrémité et s'étendant en dessous de la lame de scie circulaire (11) parallèlement à la trajectoire de l'unité de sciage (7) définie par le dispositif de guidage longitudinal (12),
une fente de passage de scie (25) ménagée dans la plaque de table (3) et traversant à une extrémité le bord de l'ouverture (19) de réception de la table circulaire (8),
au moins une autre ouverture de passage de scie (28) ménagée dans la plaque de table, cette ouverture se raccordant à l'ouverture (19) de réception de la table circulaire (8) et correspondant à au moins une position d'onglet lors du sciage de tronçonnage.

2. Scie suivant la revendication 1, caractérisée par le fait que les moyens de support (6) sont munis d'un dispositif de guidage longitudinal (12) qui permet un mouvement longitudinal de l'unité de sciage (7) à angle droit par rapport à l'axe d'articulation (14).

3. Scie suivant la revendication 1 ou 2, caractérisée par le fait que la longueur de l'ouverture de passage de scie (28), en direction radiale par rapport à l'axe de rotation de la table circulaire (8), est dimensionnée de telle manière qu'en mode de sciage de tronçonnage, la lame de scie circulaire (11) ne touche pas le bord (31) le plus éloigné de l'ouverture de passage de scie (28) lorsque l'unité de sciage (7) est entièrement engagée et, le cas échéant, est amenée à l'aide du guidage longitudinal (12) dans une position extrême qui est la plus éloignée des moyens de support (6).

4. Scie suivant la revendication 1, caractérisée par le fait que l'ouverture de passage de scie (28) présente une forme en secteur.

5. Scie suivant la revendication 4, caractérisée par le fait que l'ouverture de passage de scie (28) s'étend selon un angle au centre compris entre 45° et environ 100° autour de la table circulaire (8).

6. Scie suivant la revendication 1, caractérisée par le fait que la plaque de table (3) présente, en plus de la fente de passage de scie (48), plusieurs ouvertures de passage de scie (28a ... 28d) en forme de fente, séparées les unes des autres, parmi lesquelles deux (28a, 28b) se trouvent de préférence dans des positions correspondant à des coupes d'onglet à 45°.

7. Scie suivant la revendication 1, caracterisée par le fait que l'ouverture de passage de scie (28) est si grande qu'elle englobe la fente de passage de scie dans la plaque de table (3).

8. Scie suivant la revendication 1, caractérisée par le fait que la table circulaire (8) comporte un prolongement radial (24) qui contient un prolongement de la fente de passage de scie (25) prévu des la table circulaire (8) et qui recouvre au moins partiellement l'ouverture de passage de scie (28), et que le prolongement (28) est le cas échéant soutenu à son extrémité libre.

9. Scie suivant la revendication 8, caractérisée par le fait que le prolongement (24) présente une surface qui se trouve à ras de la surface voisine (22) de la table circulaire.

10. Scie suivant la revendication 1, caractérisée par le fait qu'à l'ouverture de passage de scie (28) est associé un capot (33, 41) qui obture, au moins dans la position de sciage sur table, l'ouverture de passage de scie (28) au moins jusqu'à la fente de passage de scie (36) et qui se trouve à ras de la première surface de table (5) (position de sciage sur table).

11. Scie suivant la revendication 1, caractérisée par le fait que le capot (41), en position de sciage de tronçonnage, sert de moyen de support de pièce.

12. Scie suivant la revendication 10, caractérisée par le fait que le capot (33, 41) présente la forme d'un segment de couronne circulaire et que le capot est disposé sur la plaque de table (3) de telle manière que le centre de courbure du capot (33, 41) coïncide avec l'axe de rotation de la table circulaire (8).

13. Scie suivant la revendication 10, caractérisée par le fait que l'autre surface de table circulaire (22) est surélevée par rapport à la deuxième surface de table (4) et que la hauteur du capot (41) par rapport à la deuxième surface de table (4) est égale à la surélévation de la deuxième surface de table circulaire (22) par rapport à la deuxième surface de table (4).

14. Scie suivant la revendication 10, caractérisée par le fait que le capot (33, 41) est une plaque à faces essentiellement planes et parallèles.

15. Scie suivant la revendication 10, caractérisée par le fait que le capot (41) est en bois, matériau à base de bois ou un autre matériau pouvant être coupé à l'aide d'une lame de scie circulaire prévue pour la coupe de bois ou de matériau à base de bois.

16. Scie suivant la revendication 10, caractérisée par le fait que le capot (33, 41) est relié de façon facilement détachable à la plaque de table (3).

17. Scie suivant la revendication 10, caractérisée par le fait que le capot (33) est relié par charnière à la plaque de table (3) de telle manière que le capot (33) puisse, dans la position de sciage de tronçonnage, être dégagé par pivotement vers le bas hors de la plaque de table (3).

18. Scie suivant la revendication 10, caractérisée par le fait que le capot (33) est subdivisé, dans la zone de la fente de passage de scie (36), en deux sections (33a, 33b) dont chacune est fixée de façon facilement détachable ou est reliée par charnière à la plaque de table (3).

19. Scie suivant la revendication 10, caractérisée par le fait que le capot (33) est subdivisé, dans une zone correspondant au réglage d'onglet 0°, en deux sections (33a, 33b) dont chacune est reliée par charnière séparément à la plaque de table (3) de telle manière que les sections (33a, 33b), dans la position de sciage de tronçonnage, puissent être dégagées par pivotement vers le bas hors de la plaque de table.

20. Scie suivant la revendication 10, caractérisée par le fait que l'ouverture de passage de scie (28) est disposée de façon assymétrique par rapport à une zone correspondant au réglage d'onglet 0°.

21. Scie suivant la revendication 10, caractérisée par le fait que le capot recouvre complètement toutes les ouvertures de passage de scie en forme de fente.

22. Scie suivant la revendication 10, caractérisée par le fait que le capot (41) est muni de moyens de centrage pour sa fixation en position correcte par rapport à l'ouverture de passage de scie (28).
